# EUROPÄISCHE PATENTSCHRIFT

(11) **EP 0 613 427 B1**
(45) Veröffentlichungstag und Bekanntmachung des Hinweises auf die Patenterteilung: **08.01.1997**
(21) Anmeldenummer: 92916830.0
(22) Anmeldetag: 28.07.1992
(51) Int. Cl.: B60M 3/00

(54) **SCHALTUNGSANORDNUNG FÜR EIN GLEICHRICHTER-UNTERWERK**
CIRCUITRY FOR RECTIFIER SUBSTATIONS
CIRCUITS POUR SOUS-STATIONS DE REDRESSEMENT

(30) Priorität: 09.08.1991 DE 4126816; 09.08.1991 DE 4126817; 09.08.1991 DE 4126818; 09.08.1991 DE 4126819
(43) Veröffentlichungstag der Anmeldung: 07.09.1994
(73) Patentinhaber: Elpro AG Berlin - Industrieelektronik und Anlagenbau -, 12673 Berlin (DE)
(72) Erfinder: GERLACH, Horst, D-1092 Berlin (DE)
(86) Internationale Anmeldenummer: EP9201706
(87) Internationale Veröffentlichungsnummer: WO9302890

(56) Entgegenhaltungen:
- EP-A- 0 209 087
- DE-A- 3 527 309

## Beschreibung

Die vorliegende Erfindung betrifft eine Schaltungsanordnung für ein Gleichrichter-Unterwerk zur Bahnstromversorgung, wobei das Unterwerk eine zentrale Gleichrichtereinheit aufweist. Die Gleichrichtereinheit kann gesteuert bzw. halbgesteuert oder ungesteuert ausgeführt sein.

Bei Gleichrichter-Unterwerken zur Versorgung von Gleichstrombahnen kommen in den Streckenabgängen die bekannten Schnellschalter zur Anwendung, die, auf einen bestimmten Auslösewert einstellbar, sicher den Überlaststrom sowie den Kurzschlußstrom abschalten können. Derartige Schalter sind jedoch im Hinblick auf ihren mechanischen Aufbau verhältnismäßig kostenaufwendig und werfen teilweise wegen der zwischen den Schalterkontakten auftretenden Lichtbogenentwicklung Sicherheitsprobleme für die Anlage auf. Überdies unterliegen diese Schalter, u.a. bedingt durch den Schaltlichtbogen, einem Verschleiß, der eine Wartung der Schnellschalter in verhältnismäßig kurzen Zeitabständen erfordert.

Aus der EP-A-206 150 sind auch Thyristorschalter an einer Gleichstrom-Sammelschiene bekannt. Das Gleichrichter-Unterwerk enthält aber im Leistungsfluß zum Gleichrichterblock zusätzliche Halbleiterschalter, wodurch die gesamte Anlage größere Verluste aufweist und ebenfalls höhere Investitionskosten erfordert. Darüberhinaus müssen noch zusätzliche Ventile eingesetzt werden, um über die Station, d.h. das Gleichrichter-Unterwerk, eine Rückspeisemöglichkeit für die Rückspeisung der Bremsenergie zu schaffen.

Eine weitere Lösung mit Thyristorschaltern an einer Drehstromsammelschiene zum Freischalten von störungsbehafteten Leitungszweigen ist auch aus der DD-A-261 485 bekannt.

Abgesehen von dem Erfordernis, auch hier zusätzliche Ventile zur Rückspeisemöglichkeit der Bremsenergie vorzusehen, ist eine solche Lösung für die Abschaltung eines gestörten Streckenabganges eines Gleichrichter-Unterwerkes der eingangs genannten Art ungeeignet, da wegen der geforderten Kurzschlußfestigkeit, z. B. über eine Zeit von 200 ms, die Auslegung der Thyristorschalter einen unvertretbaren Aufwand erfordern würde.

Es wurde auch bereits vorgeschlagen, den zentralen Gleichrichter zu einer Hälfte als Thyristorblock auszuführen, der über eine Löschschaltung zu einer zentralen, schnellen Abschaltung genutzt wird, wobei in der spannungslosen, zwar kurzen Pause, die Abschaltung eines Schnelltrenners des betreffenden Abzweiges vorgenommen wird. Somit kann der weitere Betrieb erfolgen. Es entstehen jedoch immer kurze spannungslose Pausen.

Der Erfindung liegt deshalb die Aufgabe zugrunde, eine Schaltungsanordnung für den Betrieb eines Gleichrichter-Unterwerkes zur Bahnstromversorgung von Gleichstrombahnen bei Verwendung einer zentralen Gleichrichtereinheit und Schnelltrennern in den Streckenabgängen anzugeben, die einerseits kostengünstig ist und andererseits sowohl rückspeisende Ströme als auch Kurzschlußströme sicher zu schalten vermag und zugleich eine einfache Prüfmöglichkeit der Strecke ermöglicht.

Die Aufgabe wird erfindungsgemäß durch folgende Schaltung gelöst:

An einer Plus-Gleichstrom-Sammelschiene werden die vorhandenen Streckenabgänge über jeweils einen Schnelltrenner und einen Stromwandler versorgt. Die Gleichstromsammelschiene wird ihrerseits von einem zentralen Gleichrichter gespeist. Dieser kann als gesteuerter, vorzugsweise halbgesteuerter, oder als ungesteuerter Gleichrichterblock ausgeführt sein. An jedem streckenseitigen Pol des Schnelltrenners ist eine Koppelbaugruppe angeordnet, bestehend aus zwei antiparallelen Ventilen, vorzugsweise Dioden, die jeweils zu einer Schleifenleitung führen, an die die Kommutierungseinrichtung angeschlossen ist. Diese besitzt eine Verbindung zum Pluspol des zentralen Gleichrichters. (Insgesamt umgekehrte Polung ist natürlich auch möglich).

Im Falle, daß der zentrale Gleichrichter gesteuert ausgeführt ist, ist außerdem eine Löscheinrichtung für den zentralen Gleichrichterblock mit einer Verbindung zur Drehstrom-Sammelschiene angeordnet .

Die Kommutierungseinrichtung besteht in bevorzugter Weise aus einem Kommutierungsthyristor, dem mindestens ein Löschzweig zugeordnet ist.

Der Löschzweig ist bevorzugt in der allgemein bekannten Weise, nämlich aus Löschthyristor und Löschkondensator bestehend, aufgebaut. Er wird in bevorzugter Weise über eine Diode an den Kommutierungsthyristor angekoppelt.

Die Kommutierungsbaugruppe kann in einer weiteren bevorzugten Variante auch nur aus einer Löscheinrichtung bestehen, wenn jedem Schnelltrenner ein eigener Kommutierungsthyristor zugeordnet wird. In bevorzugter Weise wird in diesem Fall für jede Stromrichtung jeweils ein Kommutierungsthyristor und ein Löschzweig vorgesehen.

Die Schaltung arbeitet in folgender Weise:

In der Ausführungsform mit einem gesteuerten Gleichrichter als zentralem Gleichrichter werden die hohen Kurzschlußströme zur Fehlerstelle durch die Löschung des Thyristorblockes mit Hilfe der Löscheinrichtung für den zentralen Gleichrichterblock abgeschaltet. Der Zufluß zur Fehlerstelle von entfernten Speisepunkten wird über die Kommutierungseinrichtung geleitet und danach durch den Löschzweig der Kommutierungseinrichtung abgeschaltet. Dies geschieht derart, daß bei einer Überstromerkennung der betreffende Schnelltrenner zur Öffnung veranlaßt wird und daß gleichzeitig die Zündimpulse für den zentralen Gleichrichterbloch gesperrt werden. Zugleich werden der Löschthyristor der Löscheinrichtung kurzzeitig und danach der Kommutierungsthyristor der Kommutierungseinrichtung mit angemessener Zünddauer gezündet und in fester Distanzzeit dazu oder nach einem Signal vom Schnelltrenner der Löschzweig der Kommutierungseinrichtung, der damit den Strom für den entsprechenden Abgang abschaltet.

Wie zum Stand der Technik bereits beschrieben, kann der Thyristorhalbblock danach wieder zugeschaltet werden, um die nicht gestörten Strecken weiter zu versorgen.

Weiter wird bei beliebigen Abschaltungen eines Streckenabganges der Schnelltrenner betätigt und zu gleich der Kommutierungsthyristor gezündet, so daß der Strom innerhalb kurzer Zeit von der Schnelltrenner-Strombahn zum Kommutierungsthyristor übergeht. Nach einer festen Distanzzeit zur Zündung des Kommutierungsthyristors bzw. nach einem Signal vom Schnelltrenner wird der Löschzweig der Kommutierungseinrichtung gezündet und unabhängig von der Stromrichtung durch den Schnelltrenner erfolgt die leistungselektronische Abschaltung.

In der Ausführungsform mit einem ungesteuerten zentralen Gleichrichter werden alle Abschaltungen eines Streckenabzweiges, also auch Kurzschlußstrom-Abschaltungen, in der zuletzt erläuterten Weise vorgenommen.

Nach der erfolgten Abschaltung eines beliebigen Streckenabganges kann mit Hilfe des Kommutierungsthyristors eine Streckenprüfung vorgenommen werden, ohne daß hierfür ein spezieller Prüfwiderstand vorhanden sein muß. Mit dem vorhandenen Löschkreis kann der Prüfstrom wieder abgeschaltet und die geprüfte Strecke gegebenenfalls, wie aus dem beschriebenen Stand der Technik bereits bekannt, wieder zugeschaltet werden.

Setzt man für die den Rückstrom führenden Ventile der Koppelbaugruppen einen Thyristor ein, so können nach einer weiteren bevorzugten Variante beide Ventile der Koppelbaugruppen auf nur eine Schleifenleitung geführt sein, die dann sowohl als Freilauf-Schleifenleitung als auch als Rückspeise-Schleifenleitung dient.

Weitere, bevorzugte Ausgestaltungen des Erfindungsgegenstandes sind in den übrigen Unteransprüchen dargelegt.

Die Erfindung wird nachstehend anhand von Ausführungsbeispielen näher erläutert. In den zugehörigen Zeichnungen zeigen
- Fig.1: die erfindungsgemäße Schaltungsanordnung zu einem Gleichrichter-Unterwerk mit einem zentralen, halbgesteuerten Gleichrichter,
- Fig.2: ein Schaltbild der erfindungsgemäßen Anordnung für ein Gleichrichter-Unterwerk mit ungesteuertem, zentralen Gleichrichter,
- Fig.3: eine Variante der Schaltung nach Fig.2 mit zusätzlicher Reserve-Löschmöglichkeit und
- Fig.4: eine Variante mit nur einer Schleifenleitung.

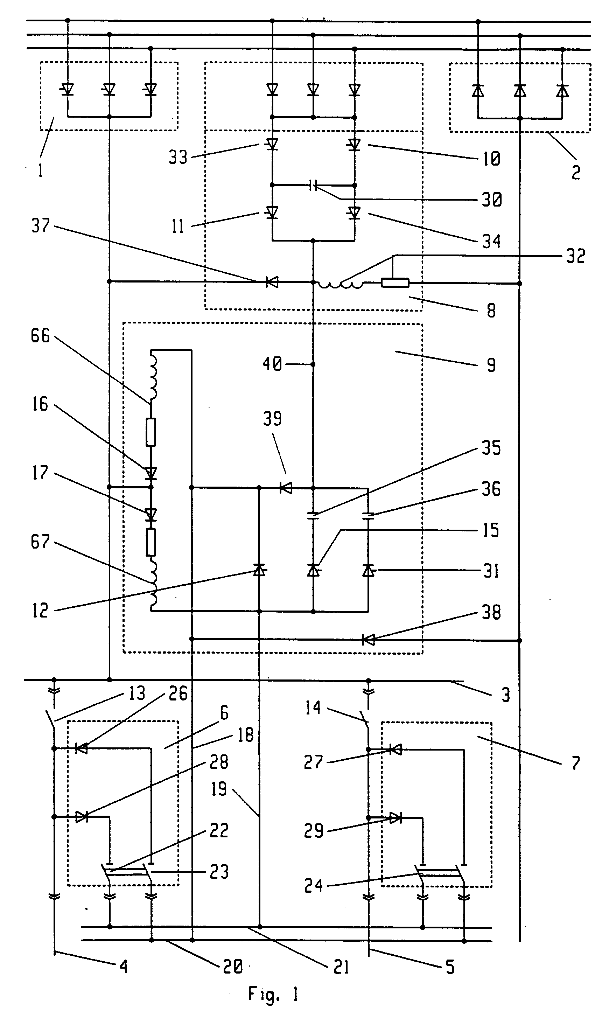

Ein bevorzugtes Ausführungsbeispiel einer Schaltungsanordnung eines Gleichrichter-Unterwerkes mit halbgesteuertem Gleichrichter ist schematisch in Fig.1 dargestellt.

Der zentrale Gleichrichter besteht aus dem Thyristorhalbblock 1 und dem Diodenhalbblock 2. Er speist z.B. eine Plus-Gleichstrom-Sammelschiene 3. An der Plus-Gleichstrom-Sammelscheine 3 befinden sich beispielsweise zwei Streckenabgänge 4 und 5, die je eine erfindungsgemäße Koppelbaugruppe 6 und 7 aufweisen. Die Streckenanschaltung ist in diesem Beispiel so realisiert, daß in die Fahrleitungsabschnitte neben dem gezeichneten Gleichrichterunterwerk auch andere Gleichrichterunterwerke einspeisen können, so daß eine durchgehende Verbindung aller Fahrleitungsabschnitte entsteht, die hier nicht dargestellt ist. Zum Gleichrichterunterwerk mit Thyristortechnik gehören erfindungsgemäß noch die Löscheinrichtung 8 und die Kommutierungseinrichtung 9. Letztere können jede Art von Fehlerabschaltung sowie auch eine Streckenprüfung vornehmen.

Bei einem Fehler des Streckenabganges 5 wird folgender Ablauf eintreten:
- Sperren des Thyristorhalbblocks 1,
- Zünden der Löschthyristoren 10 und 11,
- Auslösen des Schnelltrenners 14,
- Zünden des Kommutierungsthyristors 12 und,
- z.B. nach einer festen Distanzzeit, Zünden des 1. Löschthyristors 15 der Kommutierungseinrichtung 9.

Durch das Sperren des Thyristorhalbblochs 1 und Zünden der Löscheinrichtung 8 wird augenblicklich der große Kurzschlußstrom des nahen Gleichrichter-Unterwerkes abgeschaltet. Es öffnet sich der Schnelltrenner 14 und ein entstehender Spannungsabfall über der sich öffnenden Trennerstrecke wird durch den Kommutierungsthyristor 12 kurzgeschlossen, da nunmehr die Stromzufuhr von weiter entfernten Gleichrichter-Unterwerken nicht mehr über den Schnelltrenner 14 erfolgt, sondern über die Ankoppeldiode 17, die R-L-Kombination 67, den gezündeten Kommutierungsthyristor 12, die Verbindungsleitung 18 zur Freilauf-Schleifenleitung 20 und von dort über den Hilfstrenner 25 und die Freilaufdiode 27 zur Fehlerstelle des Streckenabganges 5.

Nach einer erfolgten Abschaltung eines beliebigen Streckenabganges und Zündung des Thyristorhalbblocks 1 kann über die Ankoppeldiode 17 und den Kommutierungsthyristor 12 eine Streckenprüfung vorgenommen werden, wobei der Prüfstrom durch den Löschzweig - Löschthyristor 15 bzw. 31, Löschkondensator 35 bzw. 36 - wieder abgeschaltet wird. Gegebenenfalls kann der gestörte Streckenabgang danach wieder zugeschaltet werden. Andernfalls kann bei einer bleibenden Abschaltung des Streckenabganges 5 der zweipolige Hilfstrenner 24, 25 geöffnet werden, so daß der Abgang zur Fahrleitungsstrecke 5 galvanisch vollkommen getrennt ist.

Die normale Abschaltung eines Streckenabganges wird anhand der Abschaltung eines Rüchspeisestromes erläutert. Wenn ein Rückspeisestrom vom Streckenabgang 5 zum Streckenabgang 4 fließt und dieser soll abgeschaltet werden, dann wird der Schnelltrenner 14 ausgelöst und der Kommutierungsthyristor 12 gezündet. Der Rückspeisestrom kommutiert vom sich öffnenden Schnelltrenner 14 in den folgenden Kreis: Rückspeisediode 29, Hilfstrenner 24, Rückspeise-Schleifenleitung 21, Verbindungsleitung 19, über den gezündeten Kommutierungsthyristor 12, die R-L-Kombination 66 und die Ankoppeldiode 16 zur Plus-Gleichstrom-Sammelschiene 3 und von dort schließt sich der Kreis zum Streckenabgang 4, wohin der Rückspeisestrom ja fließen sollte. Parallel zur Ankoppeldiode 16 fließt auch ein Teil des Rückspeisestromes über die Verbindungsleitung 18, den Hilfstrenner 23 und die Freilaufdiode 26 zum Streckenabgang 4.

Analog geschieht die Abschaltung eines Rückspeisestromes durch den Schnelltrenner 13 im Streckenabgang 4 durch Kommutieren auf die Rückspeisediode 28, den Hilfstrenner 22, die Rückspeise-Schleifenleitung 21 und den Kommutierungsthyristor 12.

Da sich immer die gleich Ablauffolge ergibt, unabhängig von der Stromrichtung, braucht auch keine Stromrichtung meßtechnisch erfaßt zu werden.

Zur Schaffung einer einfachen Redundanz sind in bevorzugter Weise zwei Löschzweige innerhalb der Kommutierungseinrichtung 9 vorgesehen, wobei immer ein Löschzweig mit den Löschkondensatoren 35, 36 den Kommutierungsstrom durch den Kommutierungsthyristor 12 löscht, und zwar durch Einschalten des betreffenden Löschthyristors 15 bzw. 31 in einer festen Distanzzeit in Bezug auf das Zünden des Kommutierungsthyristors 12.

Der Löschkondensator 30 in der Löscheinrichtung 8 wird durch Zünden der Ladethyristoren 33, 34 nach dem Löschvorgang des Thyristorhalbblocks 1, noch vor dessen Wiederzündung, in sehr kurzer Zeit über den Unterstützungszweig 32 umgeladen, so daß hier keine Redundanz erforderlich ist. Der Thyristorhalbblock 1 wird vorzugsweise etwa nach 6 ms nach dem Sperren wieder eingeschaltet. Auf den nicht betroffenen Strecken befindliche Fahrzeuge bemerken die Spannungseinsenkung nicht.

Die in bevorzugter Weise eingesetzte Freilaufdiode 38 stellt die Verbindung zwischen der Fahrschiene (Anode) her und dem Streckenabgang (Kathode) her, damit bei den schnellen Abschaltungen von Kurzschlußströmen in den Induktivitäten der Zuleitungen keine Überspannungen entstehen.

Die Koppeldiode 37 gewährleistet eine einwandfreie Kommutierung des Fehlerstromes vom Thyristorhalbblock 1 zum Löschkondensator 30 und entkoppelt zugleich den Unterstützungszweig 32 von der Plus-Gleichstrom-Sammelschiene 3.

Die bevorzugt eingesetzte Koppeldiode 39 gewährleistet eine einwandfreie Kommutierung des abzuschaltenden Stromes durch den Kommutierungsthyristor 12 zum Löschkondensator 35 bzw. 36 und entkoppelt zugleich den Unterstützungszweig 32, der durch eine Verbindungsleitung 40 mit den Löschkondensatoren 35, 36 elektrisch verschaltet ist, von den Prüfströmen und anderen Strömen, die durch den Kommutierungsthyristor 12 fließen.

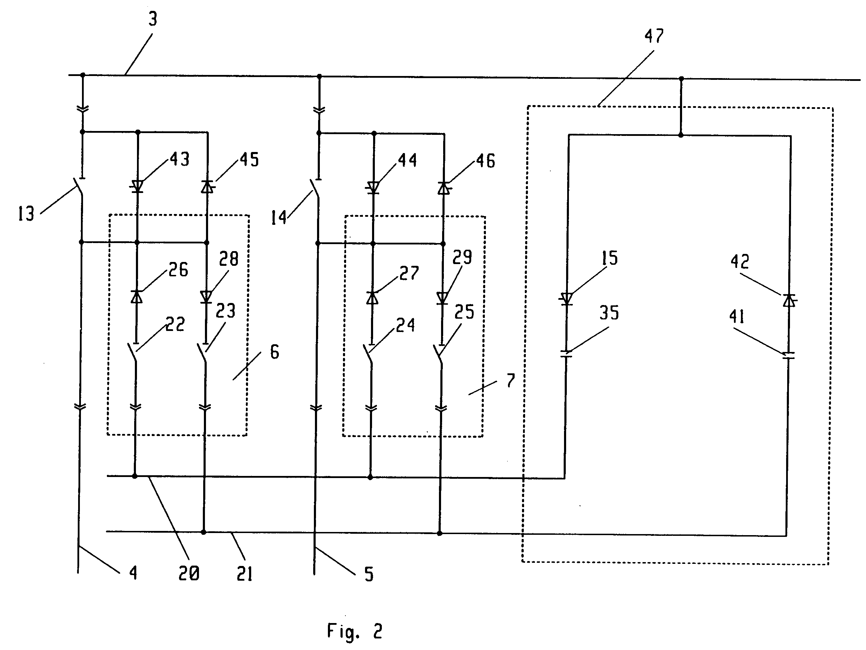

Das Gleichrichter-Unterwerk gemäß dem bevorzugten Ausführungsbeispiel nach Fig.2 besitzt eine zentrale Einspeisung mit einer Plus-Gleichstrom-Sammelschiene 3, von der die Streckenabgänge 4 und 5 abgehen. Die Streckenabgänge 4, 5 können durch die Schnelltrenner 13, 14 von der Gleichstrom-Sammelschiene 3 getrennt werden. Zu jedem Schnelltrenner 13, 14 gehört je eine Koppelbaugruppe 6, 7. Die Koppelbaugruppen 6, 7 bestehen aus jeweils einer Freilaufdiode 26, 27 sowie antiparallel dazu angeordneten Rückspeisedioden 28, 29, die am streckenseitigen Pol der Schnelltrenner 13, 14 angreifen. Sie führen über die Hilfstrenner 22, 23, 24,25 auf eine Freilauf-Schleifenleitung 20 bzw. auf eine Rückspeise-Schleifenleitung 21, die ihrerseits zu einer Kommutierungseinrichtung 47 führen.

Die Kommutierungseinrichtung 47 besteht in bevorzugter Weise aus mindestens zwei Löschzweigen, einem Vorwärts-Löschzweig, bestehend aus dem Löschthyristor 15 und dem Löschkondensator 35, und einem Rückwärts-Löschzweig mit dem Löschkondensator 41 und dem Löschthyristor 42 für die umgekehrte Stromrichtung.

Die Kommutierungsthyristoren 43, 45 bzw. 44, 46 sind in diesem Beispiel jeweils parallel zu den Schnelltrennern 13, 14 angeordnet.

Bei der Abschaltung eines Streckenabganges 4 oder 5 wird der entsprechende Schnelltrenner 13, 14 zur Öffnung veranlaßt, zugleich wird der zugehörige Kommutierungsthyristor 43, 44 gezündet. Der Strom kommutiert vom öffnenden Schnelltrenner 13, 14 auf den zugehörigen Kommutierungsthyristor 43, 44. Mit gewisser Zeitverzögerung bzw. durch einen Kontakt des sich öffnenden Schnelltrenners 13, 14 wird der Löschthyristor 15 gezündet und der Strom durch den Kommutierungsthyristor 43 bzw. 44 durch den ersten Löschzweig, bestehend aus Löschthyristor 15 und Löschkondensator 35, wieder ausgeschaltet.

Mit Hilfe der parallel zu den Schnelltrennern 13, 14 angeordneten Kommutierungsthyristoren 43, 44 kann nun eine Streckenprüfung durchgeführt werden und in Abhängigkeit von deren Ergebnis kann der betroffene Streckenabgang 4, 5 wieder eingeschaltet werden.

Die Löschung eines Rückstromes, beispielsweise bei einem Strom vom Streckenabgang 4 über die Plus-Gleichstrom-Sammelschiene 3 zum Streckenabgang 5, erfolgt in der gleichen Weise, nur über den Kommutierungsthyristor 45, den Löschthyristor 42 und den Löschkondensator 41.

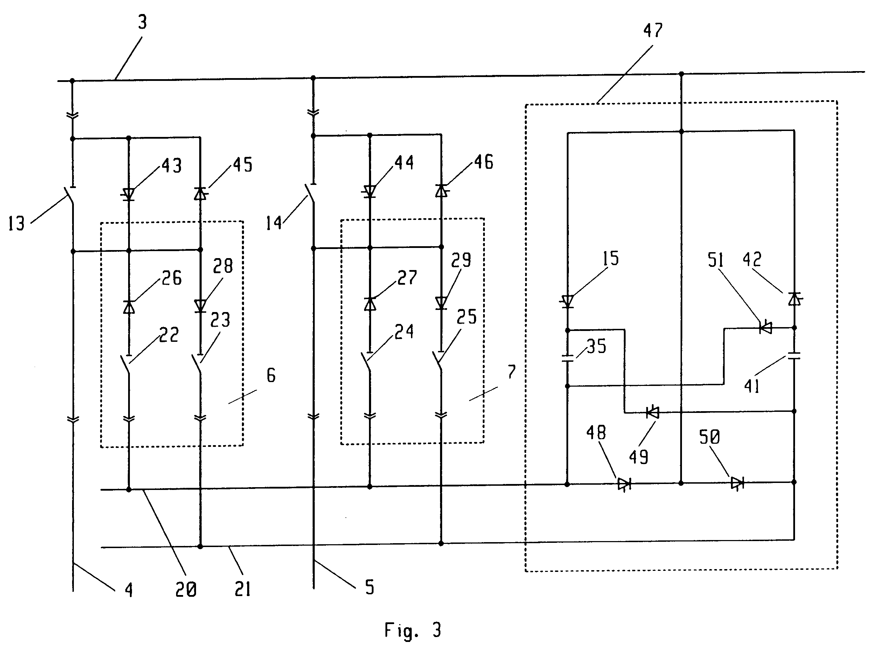

Um für die Löschung in beiden Stromrichtungen Reserve-Löschkondensatoren bereit zu haben, werden die beiden Löschzweige nach der bevorzugten Variante gemäß Fig. 3 so aufgebaut, daß die Löschkondensatoren 35, 41 zur Freilauf-Schleifenleitung 20 bzw. zur Rückspeise-Schleifenleitung 21 hin angeordnet sind, die zu diesen Leitungen hinzeigenden Beläge der Löschkondensatoren 35, 41 über die Thyristoren 48 und 50 mit der Plus-Gleichstrom-Sammelschiene 3 und die anderen Beläge über die Thyristoren 51, 49 diagonal miteinander verbunden sind. Für einen zweiten Löschvorgang steht so z.B. nach einem Löschvorgang mit Hilfe des Löschkondensators 35 durch Zünden der Thyristoren 50, 51 der Löschkondensator 41 zur Verfügung.

Die Prüfung des abgeschalteten Streckenabganges 4 erfolgt mittels des Kommutierungsthyristors 43, der gezündet wird und bei einer Strom-Schwellwertüberschreitung, festgestellt durch die Strominformation von einem Stromwandler, wird automatisch der Löschthyristor 15 gezündet und damit der festgestellte Fehlerstrom abgeschaltet. Bei einer Nichtüberschreitung des Stromschwellwertes wird nach einer Prüfzeit von beispielsweise ca. 3 s der Schnelltrenner 13 eingelegt, wodurch die Stromversorgung des Streckenabganges 4 wieder normal erfolgt.

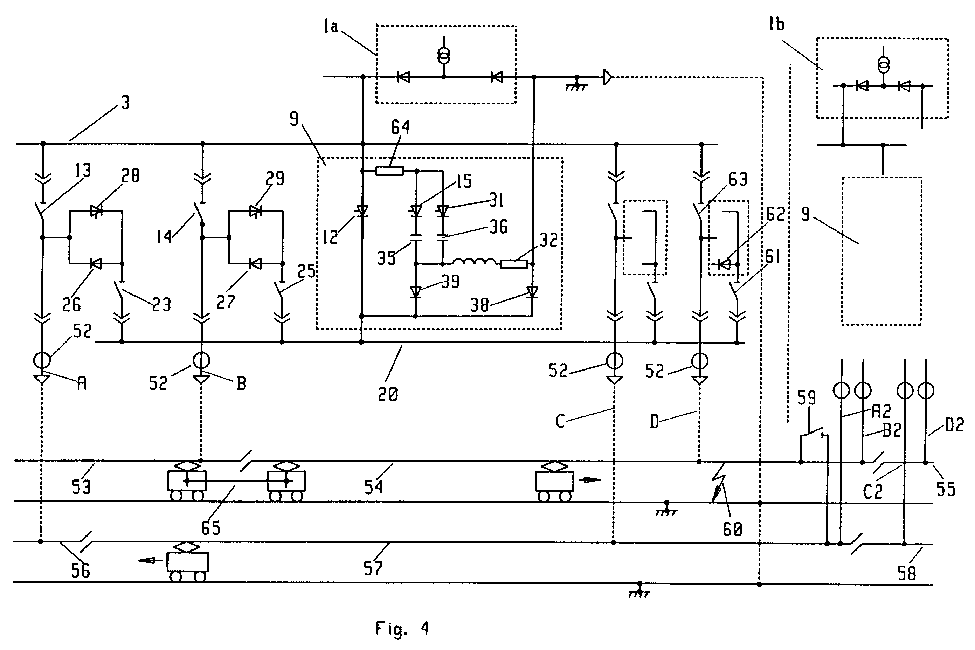

Fig.4 zeigt in einem weiteren bevorzugten Ausführungsbeispiel zwei Gleichrichter-Unterwerke mit den Einspeisungen 1a und 1b, wobei das erste Gleichrichter-Unterwerk ausführlicher dargestellt ist als das zweite. Die hier gezeigten Gleichrichter-Unterwerke sind gleichartig aufgebaut und infolge der hier angegebenen, bekannten Schaltung sind alle miteinander verbunden, so daß die zweigleisige Strecke durchgeschaltet ist. Das zweite Gleichrichter-Unterwerk kann aber auch andersartig aufgebaut sein, z.B. kann es mit Schnellschaltern ausgerüstet sein.

Das dargestellte Gleichrichter-Unterwerk besteht aus der Plus-Gleichstrom-Sammelschiene 3, von der z.B. vier Streckenabgänge A, B, C und D abgehen, die in der Zeichnung durch folgende Elemente dargestellt sind: Schnelltrenner 13, 14, Stromwandler 52, Feilaufdioden 26, 27, Rückspeiseventile 28, 29 und Hilfstrenner 23, 25. Die Hilfstrenner 23, 25 sind an eine Freilauf-Schleifenleitung 20 angeschlossen. Zwischen der Plus-Gleichstrom-Sammelschiene 3 und der Freilauf-Schleifenleitung 20 ist die Kommutierungseinrichtung 9 angeordnet. Diese besteht in bevorzugter Form aus dem Kommutierungsthyristor 12 und dem Löschzweig, der seinerseits aus dem Löschthyristor 15, dem Löschkondensator 35 und der Koppeldiode 39 besteht.

Weiter ist zwischen der Bahnerde, hier der Minus-Pol, und der Freilauf-Schleifenleitung 20 eine Freilaufdiode 38 geschaltet.

Die beiden Anoden, nämlich die der Koppeldiode 39 und die der Freilaufdiode 38 werden durch einen Unterstützungszweig 32, bestehend aus einer Induktivität und einem Widerstand, verbunden. Ebenso wie die Streckenabgänge A bis D und die Kommutierungseinrichtung 9 befinden sich die gleichen Elemente im zweiten Gleichrichter-Unterwerk und in weiteren.

Die Streckenabschnitte 53, 54, 55, 56, 57 und 58 sind mit folgenden Streckenabgängen verbunden: 53 mit B, 54 mit D und mit B2, 55 mit D2, 56 mit A, 57 mit C und mit A2 sowie 58 mit C2. Weiter ist noch eine Querkupplung mittels des Schaltgerätes 59 dargestellt. Das Schaltgerät 59 ist eingeschaltet.

Das Arbeitsregime soll anhand von Fehlerabschaltungen erläutert werden, wozu zuerst ein Kurzschluß 60 auf der Strecke 54 angenommen wird. Weiterhin wird angenommen, daß die Streckenabgänge D und B eingeschaltet sind und die Streokenabgänge A und C ausgeschaltet sind. Dies gilt auch für das zweite Gleichrichter-Unterwerk und weitere , und es wird dabei noch angenommen, daß nur die Streckenabgänge D und B2 den Auslösewert erreichen. Weitere Streckenabgänge mögen durch einen hier nicht dargestellten di/dt-Schutz angeregt werden.

Die Abschaltung der Streckenabgänge D und B2 soll am Beispiel der Abschaltung für den Streckenabgang D beschrieben werden. Der Schnelltrenner 63 des Streckenabganges D erhält den Aus-Befehl; zugleich werden der Kommutierungsthyristor 12 und der (hier nicht gezeigte) Rückspeisethyristor (analog 28 bzw. 29) gezündet, so daß der Strom vom sich öffnenden Schnelltrenner 63 kommutiert wird zum Kommutierungsthyristor 12 auf die Freilauf-Schleifenleitung 20, über den Hilfstrenner 61 und die Freilaufdiode 62 des Streckenabgangs D zum Streckenabgang D, so daß der Kurzschlußstrom zum Kurzschluß 60 nun folgenden Weg nimmt: von der Plus-Gleichstrom-Sammelschiene 3 durch den Kommutierungsthyristor 12, durch die Freilauf-Schleifenleitung 20, den Trenner 61, die Freilaufdiode 62 und den Stromwandler 52 des Streckenabganges D.

Genauso ist die Kommutierung im Streckenabgang B2 zu betrachten, wobei dort die Kommutierungseinrichtung 9 des zweiten Gleichrichter-Unterwerkes beteiligt ist.

Nach einer festeingestellten Zeit bzw. nach einer Kontaktgabe durch den sich öffnenden Schnelltrenner 63 des Streckenabgangs D wird der Löschthyristor 15 gezündet, der den Strom des Kommutierungsthyristors 12 übernimmt (negatives Potential an der Anode des Kommutierungsthyristors 12 infolge der Kondensatorausgangsspannung), wobei durch das Umladen des Löschkondensators 35 der Löschthyristor 15 blockiert und somit die Abschaltung des Streckenabganges D beendet wird. Nach der Zündung des Löschthyristors 15 fließt ein kurzer Impulsstrom auch über alle Koppelzweige (Freilaufdioden und Hilfstrenner), soweit die Schnell-Trenner geschlossen sind, im angenommenen Beispiel also ist der Streckenabgang B davon betroffen. Die Höhe dieses Impulsstromes wird durch den Widerstand 64 begrenzt. Der Impulsstrom, z. B. über die Elemente des Streckenabganges B, wird vollkommen vermieden, wenn die Freilaufdioden durch Thyristoren ersetzt werden und nur der Thyristor gezündet wird, dessen Streckenabgang geschaltet werden soll, im Beispiel also nur vom Streckenabgang D.

Der Unterstützungszweig 32 dient der sicheren Streckenabschaltung, falls die Strecken sich im Leerlauf befinden. Die Freilaufdiode 38 wirkt sich günstig auf die Senkung von Schaltspannungen aus.

Es wird weiter angenommen, daß der Kurzschluß 60 besteht und zur gleichen Zeit oder geringfügig zeitlich versetzt durch eine Zugeinheit 65 die Trennstelle zwischen den Streckenabgängen B und D elektrisch überbrückt wird. Nun fließt zur Kurzschlußstelle 60 über B ein solcher Strom, der den Ansprechwert erreichen möge, so daß der Schnelltrenner 14 vom Streckenabgang B geöffnet und der Kommutierungsthyristor 12 erneut sowie der Rückspeisethyristor 29 vom Streckenabgang B gezündet werden bzw. hier noch ein Kommutierungsstrom fließt und später ein Reserve-Löschthyristor 31 und - Löschkondensator 36 zum Einsatz kommen, um den gesamten Kurzschlußstrom vom ersten Gleichrichter-Unterwerk, wie oben beschrieben, restlos abzuschalten.

Es wird weiter angenommen, daß die vorher deklarierte Fehlerbeschreibung besteht. Zusätzlich sei angenommen, daß alle Streckenabgänge A, B, C, D eingeschaltet sind. Hier kann es notwendig sein, daß die Streckenabgänge B, C und D abgeschaltet werden müssen, evtl. auch noch der Streckenabgang A. Alle diese Schaltungen laufen wie beschrieben ab. Es war hierbei auch noch angenommen worden, daß das Fehlerstromereignis, angedeutet durch die Zugeinheit 65, zu einem ungünstigen Zeitpunkt eintritt, der die Zündung des Reserve-Löschthyristors 31 erfordert, da die Umladung der ersten Löschkapazität schon begonnen hatte.

Rückspeisende Ströme, z.B. über den sich öffnenden Schnelltrenner 13 des Streckenabgangs A zum Streckenabgang D, werden wie folgt geschaltet:
- Öffnungsbefehl für den Schnelltrenner 13,
- Zündung des Kommutierungsthyristors 12 und zum gleichen Zeitpunkt Zündung des Rückspeisethyristors 28 des Streckenabganges A.

Der Strom kommutiert in folgende Bahn:
- Rückspeisethyristor 28 von Streckenabgang A,
- Hilfstrenner 23,
- Freilauf-Schleifenleitung 20,
- Freilaufdiode 62 des Streckenabganges D zum Streckenabgang D.

Der Rückspeisethyristor 28 wird nicht gelöscht und geht selbständig aus, wenn der Bremsstrom auf Null gegangen ist.

Nach einer erfolgten Abschaltung kann über den Kommutierungsthyristor 12 eine Streckenprüfung vorgenommen werden, wobei der Prüfstrom durch den Löschzweig - Löschthyristor 15, Löschkondensator 35 und Koppeldiode 39 - wieder abgeschaltet wird.

Durch die erfindungsgemäße Schaltungsanordnung ist es möglich, Fehlerströme und Lastströme gleich welcher Richtung, von der Gleichstrom-Sammelschiene hin oder von ihr weg, zu schalten, wobei nur die Stromwertinformation (Absolutwert) des Abganges benötigt wird. Die Streckenprüfung kann ohne Streckenprüfwiderstand durchgeführt werden, da die eingebauten technischen Mittel der Koppel- und der Löschbaugruppe dazu benutzt werden.

## Patentansprüche

1. Schaltungsanordnung für ein Gleichrichter-Unterwerk mit einer Gleichstrom-Sammelschiene (3) an der über Schnelltrenner (13,14) mehrere Streckenabgänge (4,5) angelenkt sind sowie einer zentralen Gleichrichereinheit (1,2), **dadurch gekennzeichnet**, daß am streckenseitigen Pol jedes Schnelltrenners (13,14,63) eine Koppelbaugruppe (6,7) angeordnet ist, die zu einer Freilauf-Schleifenleitung (20) und einer Rückspeise-Schleifenleitung (21) geführt ist, die ihrerseits zu einer Kommutierungseinrichtung (9) führen, bestehend aus einem oder mehreren Kommutierungsthyristoren (12), denen mindestens ein Löschzweig (15,35; 31,36) parallelgeschaltet ist.

2. Schaltungsanordnung nach Anspruch 1, **dadurch gekennzeichnet**, daß die zentrale Gleichrichtereinheit ein gesteuerter Gleichrichter ist.

3. Schaltungsanordnung nach Anspruch 1, **dadurch gekennzeichnet**, daß die zentrale Gleichrichtereinheit ein ungesteuerter Gleichrichter ist.

4. Schaltungsanordnung nach Anspruch 1 und 2, **dadurch gekennzeichnet, daß** die zentrale Gleichrichtereinheit ein halbgesteuerter Gleichrichter ist.

5. Schaltungsanordnung nach Anspruch 1 und 2 oder 4, **dadurch gekennzeichnet**, daß dem Thyristorhalbblock (1) des zentralen Gleichrichterblockes eine separate Löscheinrichtung zugeordnet ist.

6. Schaltungsanordnung nach Anspruch 1, **dadurch gekennzeichet,** daß der Kommutierungsthyristor (12) beidseitig über je eine Ankoppeldiode (16, 17) und/oder eine R-L-Kombination (66, 76) an die Plus-Gleichstrom-Sammelschiene (3) angeschlossen ist.

7. Schaltungsanordnung nach Anspruch 1, **dadurch gekennzeichet**, daß die Koppelbaugruppe aus einem Freilaufventil, dazu antiparallel angeordnetem Rückspeiseventil und zugeordneten Hilfstrennern (22, 23, 24, 25) besteht.

8. Schaltungsanordnung nach Anspruch 7, **dadurch gekennzeichet,** daß als Freilaufventil eine Freilaufdiode (26, 27, 62) dient.

9. Schaltungsanordnung nach Anspruch 7, **dadurch gekennzeichet,** daß als Freilaufventil ein Freilaufthyristor dient.

10. Schaltungsanordnung nach Anspruch 7, **dadurch gekennzeichet**, daß als Rückspeiseventil eine Rückspeisediode (28, 29) dient.

11. Schaltungsanordnung nach Anspruch 7, **dadurch gekennzeichet**, daß als Rückspeiseventil ein Rückspeisethyristor (28, 29) dient.

12. Schaltungsanordnung nach Anspruch 1, **dadurch gekennzeichet**, daß der Löschzweig aus einem Löschthyristor (15, 31) und einem Löschkondensator (35, 36) besteht.

13. Schaltungsanordnung nach Anspruch 11, **dadurch gekennzeichet,** daß der oder die Löschzweige über eine Koppeldiode (39) mit dem Kommutierungsthyristor (12) verbunden sind.

14. Schaltungsanordnung nach Anspruch 11, **dadurch gekennzeichet**, daß der oder die Löschzweige über einen Unterstützungszweig (32), bestehend aus einem ohmschem Widerstand und einer Induktivität, mit der Minusleitung verbunden sind.

15. Schaltungsanordnung nach Anspruch 1, **dadurch gekennzeichet**, daß zwischen der Minusleitung und der Freilauf-Schleifenleitung (20) eine Freilaufdiode (38) angeordnet ist.

## Claims

1. Circuit arrangement for a rectifier sub-station with a direct current bus bar (3) to which several track section outputs (4, 5) are connected via quick-action interrupters (13, 14) as well as a central rectifier unit (1, 2), **characterised by the fact that a** coupling sub-assembly (6, 7) is arranged on the track-side pole of each quick-action interrupter (13, 14, 63) which is taken to an idler loop (20) and a feedback loop (21) which, in turn, lead to a commutation device (9) comprising one or more commutation thyristors (12) with which at least one reset branch (15, 35; 31, 36) is connected in parallel.

2. Circuit arrangement as in Claim 1, **characterised by the fact that** the central rectifier unit is a switched rectifier.

3. Circuit arrangement as in Claim 1, **characterised by the fact that** the central rectifier unit is a non-switched rectifier.

4. Circuit arrangement as in Claims 1 and 2, **characterised by the fact that** the central rectifier unit is a semi-switched rectifier.

5. Circuit arrangement as in Claims 1 and 2 or 4, **characterised by the fact that** the thyristor half block (1) of the central rectifier block is allocated to a separate reset device.

6. Circuit arrangement as in Claim 1, **characterised by the fact that** each side of the commutation thyristor (12) is connected to the positive direct current bus bar (3) via a coupling diode (16, 17) and/or a R-L combination (66, 76).

7. Circuit arrangement as in Claim 1, **characterised by the fact that** the coupling sub-assembly comprises an idler valve, and a feedback valve with its associated auxiliary interrupters (22, 23, 24, 25) in an antiparallel arrangement.

8. Circuit arrangement as in Claim 7, **characterised by the fact that** an idler diode (26, 27, 62) serves as idler valve.

9. Circuit arrangement as in Claim 7, **characterised by the fact that** an idler thyristor serves as idler valve.

10. Circuit arrangement as in Claim 7, **characterised by the fact that** a feedback diode (28, 29) serves as feedback valve.

11. Circuit arrangement as in Claim 7, **characterised by the fact that** a feedback thyristor (28, 29) serves as feedback valve.

12. Circuit arrangement as in Claim 1, **characterised by the fact that** the reset branch comprises a reset thyristor (15, 31) and a reset capacitor (35, 36),

13. Circuit arrangement as in Claim 11, **characterised by the fact that** the reset branch or branches is/are connected to the commutation thyristor (12) via a coupling diode (39).

14. Circuit arrangement as in Claim 11, **characterised by the fact that** the reset branch or branches is/are connected to the negative line via a support branch (32) comprising a direct current resistor and an inductance.

15. Circuit arrangement as in Claim 1, **characterised by the fact that** an idler diode (38) is arranged between the negative line and the idler loop (20).

## Revendications

1. Configuration des circuits pour une sous-station de redressement avec une barre collectrice à courant continu (3) sur laquelle sont articulés plusieurs départs de voie (4,5) par l'intermédiaire de sectionneurs rapides (13, 14), ainsi qu'avec une unité de redressement central (1,2), **caractérisée en ce que** le pôle côté voie de chaque sectionneur rapide (13, 14, 63) présente un module de couplage (6, 7) qui est conduit à un circuit en boucle de roue libre (20) et à un circuit en boucle de réalimentation (21) qui conduisent de leur côté à un dispositif de commutation (9) composé d'un ou de plusieurs thyristors de commutation (12) auxquels est couplé en parallèle au moins un bras d'extinction (15, 35; 31, 36).

2. Configuration des circuits selon la revendication 1, **caractérisée en ce que** l'unité de redressement central est un redresseur commandé.

3. Configuration des circuits selon la revendication 1, **caractérisée en ce que** l'unité de redressement central est un redresseur non commandé.

4. Configuration des circuits selon la revendication 1 et 2, **caractérisée en ce que** l'unité de redressement central est un redresseur semi-commandé.

5. Configuration des circuits selon la revendication 1 et 2 ou 4, **caractérisée en ce qu**'un dispositif d'extinction séparé est affecté au demi-bloc de thyristor (1) du bloc de redressement central.

6. Configuration des circuits selon la revendication 1, **caractérisée en ce que** le thyristor de commutation (12) est branché des deux côtés à la barre collectrice de courant continu plus (3) par l'intermédiaire respectivement d'une diode d'accouplement (16, 17) et/ou d'une combinaison RL (66, 76).

7. Configuration des circuits selon la revendication 1, **caractérisée en ce que** le module de couplage se compose d'une soupape de roule libre, d'une soupape de réalimentation disposée d'une manière antiparallèle à celle-ci et de sectionneurs auxiliaires affectés (22, 23, 24, 25).

8. Configuration des circuits selon la revendication 7, **caractérisée en ce qu'**une diode de roue libre sert de soupape de roue libre (26, 27, 62).

9. Configuration des circuits selon la revendication 7, **caractérisée en ce qu'**un thyristor de roue libre sert de soupape de roue libre.

10. Configuration des circuits selon la revendication 7, **caractérisée en ce qu**'une diode de réalimentation (28, 29) sert de soupape de réalimentation.

11. Configuration des circuits selon la revendication 7, **caractérisée en ce qu**'un thyristor de réalimentation (28, 29) sert de soupape de réalimentation.

12. Configuration des circuits selon la revendication 1, **caractérisée en ce que** le bras d'extinction se compose d'un thyristor d'extinction (15, 31) et d'un condensateur d'extinction (35, 36).

13. Configuration des circuits selon la revendication 11, **caractérisée en ce que** le ou les bras d'extinction sont reliés au thyristor de commutation (12)par l'intermédiaire d'une diode d'accouplement (39).

14. Configuration des circuits selon la revendication 11, **caractérisée en ce que** le ou les bras d'extinction sont reliés à la conduite négative par l'intermédiaire d'un bras de soutien (32) composé d'une résistance en courant continu et d'une inductance.

15. Configuration des circuits selon la revendication 1, **caractérisée en ce que** une diode de roue libre (38) est disposée entre la conduite négative et le circuit en boucle de roue libre (20)
